# EUROPEAN PATENT SPECIFICATION

(11) **EP 3 062 547 B1**
(45) Date of publication and mention of the grant of the patent: **12.02.2020**
(21) Application number: 15305298.0
(22) Date of filing: 26.02.2015
(51) Int. Cl.: H04W 12/12, H04W 4/02, H04W 64/00, H04W 12/02, G06F 21/45, G06F 21/62, H04W 8/16, H04W 84/12, H04W 4/029

(54) **USER TRACKING**
BENUTZERVERFOLGUNG
SUIVI D'UTILISATEUR

(43) Date of publication of application: 31.08.2016
(73) Proprietor: Alcatel Lucent, 91620 Nozay (FR)
(72) Inventor: Mashhadi, Afra, Dublin (IE); Vanderhulst, Geert, 2018 Antwerpen (BE); Kawsar, Fahim, 2018 Antwerpen (BE)
(74) Representative: Novagraaf Technologies

(56) References cited:
- WO-A1-2015/104251
- WO-A2-2014/205431
- US-A1- 2014 364 099

## Description

### Technical Field

The present invention relates to a portable electronic end-user device and to a method for communicating a do-not-track flag.

### Background

Tracking users via their mobile devices is a popular strategy for gaining insights in customer behavior. Via the wireless signals these devices emit, e.g., WiFi or Bluetooth, sniffing hardware deployed in a public place, e.g., a store, can learn about device identifiers, i.e., MAC addresses, record those and exploit them to track user trajectories and frequency of visits. Since tracking often happens without the user being aware of it, the technology is considered privacy invasive and is even forbidden by law in selected countries.

"Do Not Track" (DNT) solutions have been applied in related domains. For instance, Google adopts a database of WiFi Access Points (APs) used for localisation. By appending "_nomap" to the name (SSID) of such AP, an AP owner can explicitly indicate to Google that her AP may not be included in such database. However, this solution applies to APs only, and cannot be transferred to end-user devices.

Another example is a DNT meta header that is sent along with each Web page request in a Web browser (http://www.w3.org/TR/tracking-dnt/). It indicates to a Web server that it should record any personal data of the user like cookies, honored at the server's discretion.

Device vendors like Apple and wireless standards like BLE 4.2 seek to protect the privacy of users against unwanted tracking, for example by altering the MAC address of a device at regular intervals, which is a feature known as MAC randomization. However, network-based tracking is not only useful for customer tracking, but also for location-based services like indoor navigation. Since the tracking and/or localization happens entirely in the network, the mobile device's resources are not exploited and hence do not drain the battery. However it is currently not possible to protect a users privacy while allowing a user to utilize services that use network-based tracking. WO2014205431 discloses facilitating the control over privacy settings, including the ability to track/trace device locations (do-not-track flag) and the content presented to the device associated with devices. Privacy settings are transmitted to the registry, which is to be contacted, before the results of the sniffing can be stored.

It is an object of the present invention to provide privacy protection to a user with a portable electronic end-user device while allowing the user to utilize network-based tracking services.

### Summary

The present invention is defined by the subject matter of the independent claims. Preferred embodiments are defined by the dependent claims.

### Brief description of the figures

Some embodiments of apparatus and/or methods in accordance with embodiments of the present invention are now described, by way of example only, and with reference to the accompanying drawings, in which:
figure 1 illustrates a portable electronic end user device and a sniffing hardware device according to an embodiment of the present invention; and
figure 2 illustrates the method of the invention.

### Detailed description of embodiments

In the present invention, it is suggested to integrate do-not-track, hereafter DNT, technology in a portable electronic end-user device's radio signals. In the settings screen of the device, accessible via the user interface, an option would be available to opt-in or opt-out to network-based tracking. This option allows the user to protect its privacy and allows the user to make use of network-based tracking services such as indoor location-based services.

To comply with local laws, sniffing hardware can be assigned a certification label specifying that the hardware implements the DNT technology discussed in this description and thus respects the users' privacy. Therefore the DNT integration presented in the current description can facilitate the policy makers to relax the current legislations on network-based tracking, thus enabling a multitude of services to the users without compromising users' privacy.

Two technical solutions are suggested to communicate the DNT setting to sniffing hardware.

In a first example the DNT setting is encoded in the MAC address of a device's wireless network interface, e.g., a WiFi and/or BLE chip. For example, consider an arbitrary MAC address "00:0a:95:9d:68:16". By replacing the first two digits with 'DD' (yielding "DD:0a:95:9d:68:16"), it is indicated that this MAC address should not be tracked. The set of symbol 'DD' is considered a predetermined set of symbols and the first two elements are considered the predetermined location in the MAC address. The skilled person will understand that several other encodings can be applied to embed a DNT flag in the MAC address. It should be noted that this solution can be realized independent of the network protocol being used. Also, it is easy to implement, both on a user device, by configuring the MAC address, and on sniffing hardware by testing each MAC address that is detected.

In the invention it is suggested to encode the DNT setting in a WiFi probe frame. This can be achieved via so called "beacon stuffing" or probe stuffing where e.g., the vendor specific Beacon Information Elements are leveraged to store the proposed DNT flag. Since typically only 1 bit is required to store this flag, also other reserved bits in a probe frame can be used for this purpose. In either case, a monitoring process running at the tracking hardware should analyze the sensed probe frame's metadata, formed by the Beacon Information Elements, to understand whether the user wishes to opt-in or to opt-out of network-based tracking. Similarly, a certificate-based approach on the sniffing hardware can guarantee that the network is following the opt-in, opt-out policy as specified by the user's DNT flag.

An example of wifi management frames are wifi probes. Probe requests are WiFi management frames that are broadcasted by a device to actively discover nearby APs. Mobile devices periodically send out these probe requests with a frequency that is vendor-specific (typically between 15 and 60 seconds, depending on the power state of the device). Since probe requests are not encrypted, they can easily be intercepted (sniffed) using commodity hardware, i.e., a WiFi chip set to monitor mode.

By integrating a do-not-track flag as metadata in the WiFi probe frames, and regulating the access point and sniffing hardware operations accordingly, user privacy can be protected while network based services can be provided to an end user.

A first advantage of the proposed solution is that it is a user-centric privacy mechanisim, which allows the users to opt-in and to opt-out of potential network-based tracking allowing multitude of services to be built upon network-based tracking without the fear of invading privacy.

A second advantage of the proposed solution is that it is easy to implement, without altering network standards. More particularly, it is universally applicable and compliant with existing hardware.

A third advantage of the proposed solution is that it is an effective solution to legalise network-based tracking whilst keeping the user in control.

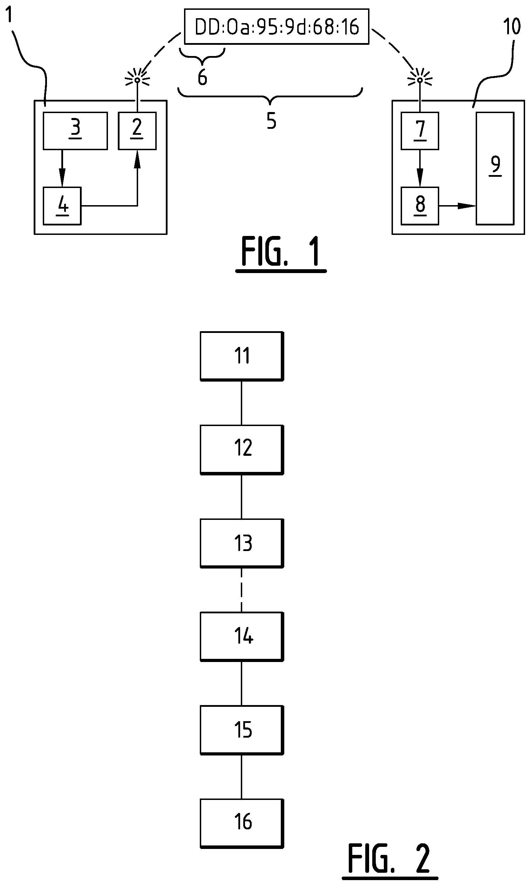

Figure 1 illustrates a portable electronic end user device 1 comprising a wireless communication module 2, a memory 4 and a user interface 3. Thereby, an end user using the portable electronic end user device 1 is able to select a do-not-track setting via user interface 3 which setting switches a value stored in the memory 4 between YES and NO. A do-not-track value YES indicates that the user does not want to be tracked so that his privacy is respected. A do-not-track value NO indicates that the user allows network based tracking. It will be clear that the YES and NO value can be encoded in multiple manners, for example by a respective 0 and 1 value, or by a boolean that is switchable between true and false.

When a wireless signal is sent by the wireless communication module 2, the wireless communication module 2 checks the memory for the do-not-track value, and communicates a do-not-track flag 6 in the wireless signal 5. This do-not-track flag 6 can be implemented in multiple ways as is described above.

Sniffing hardware 10 receives the wireless signal 5 via a communication module 7. The signal 5 is filtered by a control mechanism 8. This control mechanism is adapted to block further use of the wireless signal 5 by the processor 9 of the sniffing hardware if the do-not-track value indicates that the user does not want to be tracked. On the other hand, if the do-not-track value indicates that network based tracking is allowed, the signal 5 can be transferred for further processing 9 in the sniffing hardware 10. In this manner, the privacy of the user is respected and network based tracking services can be provided to users that allow network based tracking.

Figure 2 illustrates a method of the invention. In step 11, a do-not-track setting is selected by the user, wherein the user can select wether or not he allows network based tracking. In step 12, a value is stored in the memory based on the selection made in step 11. In step 13, the wireless communication module communicates a do-not-track flag depending on the do-not-track value stored in the memory. When the wireless signal sent by the wireless communication module in step 13 is received by sniffing hardware, as indicated in step 14, a step 15 filters the do-not-track flag from the wireless signal. Depending on the outcome of step 15, step 16, being further processing of the wireless signal, is executed. If the do-not-track flag indicates that the user does not want to be tracked, then the wireless signal is blocked by filter 15, and step 16 is not executed. If on the other hand, the filter shows that the user allows network based tracking, step 16 is executed.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention.

Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Portable electronic end-user device (1) comprising a wireless communication module, a memory and a user interface, wherein the memory comprises a do-not-track value that is switchable by an end-user via the user interface between Yes and No, and wherein the end-user device is further adapted to communicate (13) a do-not-track flag via the wireless communication module depending on the do-not-track value **characterized in that** the end-user device is provided with a WiFi management frame generator adapted for integrating a do-not-track flag as metadata in the WiFi probes.

2. Portable electronic end-user device according to claim 1, wherein the metadata is formed as a predetermined bit in the WiFi probe frame.

3. Sniffing hardware (10) adapted to catch (14) wireless signals, comprising WiFi probes having metadata, of portable electronic end-user devices, wherein the sniffing hardware is provided with a control mechanism which filters a do-not-track value from the metadata, and which control mechanism is further adapted to block further use of the wireless signals in the sniffing hardware depending on the do-not-track value.

4. Method for protecting user privacy while allowing network-based tracking services, the method comprising:
- providing (11) to a user of a portable electronic end-user device, via a user interface thereof, the option to allow or deny network-based tracking;
- storing (12) a do-not-track value in the memory of the device, based on the option selected by the user;
- communicating (13) a do-not-track flag via a wireless communication module of the device depending on the do-not-track value, **characterized in that** the step of communicating a do-not-track flag further comprises generating a WiFi probe via a WiFi management frame generator wherein a do-not-track flag is integrated as metadata in the WiFi probe.

5. Method according to claim 4, wherein the metadata is formed as a predetermined bit in the WiFi probe frame.

6. Method according to any one of the claims 4-5, wherein the method further comprises the step of receiving a signal from the portable electronic end-user device by a sniffing hardware, wherein the sniffing hardware is provided with a control mechanism which filters the do-not-track value from the wireless signals, and which control mechanism is further adapted to block further use of the wireless signals in the sniffing hardware depending on the do-not-track value.

7. A computer readable storage medium comprising instructions, which, when executed cause a data processing apparatus to carry out the steps of the method of any one of the claims 4-6.

## Patentansprüche

1. Tragbare elektronische Endbenutzervorrichtung (1), die ein drahtloses Kommunikationsmodul, einen Speicher und eine Benutzeroberfläche umfasst, wobei der Speicher einen Do-Not-Track-Wert umfasst, der durch einen Endbenutzer über die Benutzeroberfläche zwischen Ja und Nein umschaltbar ist, und wobei die Endbenutzervorrichtung ferner ausgelegt ist zum Übermitteln (13) eines Do-Not-Track-Flags über das drahtlose Kommunikationsmodul abhängig von dem Do-Not-Track-Wert, **dadurch gekennzeichnet, dass** die Endbenutzervorrichtung mit einem WiFi-Management-Rahmengenerator ausgestattet ist, der dafür ausgelegt ist, ein Do-Not-Track-Flag als Metadaten in die WiFi-Sondierungen zu integrieren.

2. Tragbare elektronische Endbenutzervorrichtung nach Anspruch 1, wobei die Metadaten als ein vorbestimmtes Bit in dem WiFi-Sondierungsrahmen gebildet sind.

3. Sniffing-Hardware (10), ausgelegt zum Abfangen (14) von drahtlosen Signalen, die WiFi-Sondierungen umfassen, die Metadaten aufweisen, von tragbaren elektronischen Endbenutzervorrichtungen, wobei die Sniffing-Hardware mit einem Steuermechanismus ausgestattet ist, der einen Do-Not-Track-Wert aus den Metadaten herausfiltert und wobei der Steuermechanismus ferner ausgelegt ist zum Sperren der weiteren Verwendung der drahtlosen Signale in der Sniffing-Hardware abhängig von dem Do-Not-Track-Wert.

4. Verfahren zum Schutz der Benutzerprivatsphäre, während Tracking-Dienste auf Netzwerkbasis erlaubt werden, wobei das Verfahren Folgendes umfasst:
- Bereitstellen (11) der Option, Tracking auf Netzwerkbasis zu erlauben oder zu verweigern, für einen Benutzer einer tragbaren elektronischen Endbenutzervorrichtung über eine Benutzeroberfläche davon;
- Speichern (12) eines Do-Not-Track-Werts in dem Speicher der Vorrichtung auf der Basis der durch den Benutzer ausgewählten Option;
- Übermitteln (13) eines Do-Not-Track-Flags über ein drahtloses Kommunikationsmodul der Vorrichtung abhängig von dem Do-Not-Track-Wert, **dadurch gekennzeichnet, dass** der Schritt des Übermittelns eines Do-Not-Track-Flags ferner Erzeugen einer WiFi-Sondierung über einen WiFi-Management-Rahmengenerator umfasst, wobei ein Do-Not-Track-Flag als Metadaten in die WiFi-Sondierung integriert wird.

5. Verfahren nach Anspruch 4, wobei die Metadaten als ein vorbestimmtes Bit in dem WiFi-Sondierungsrahmen gebildet sind.

6. Verfahren nach einem der Ansprüche 4-5, wobei das Verfahren ferner den Schritt des Empfangens eines Signals von der tragbaren elektronischen Endbenutzervorrichtung durch eine Sniffing-Hardware umfasst, wobei die Sniffing-Hardware mit einem Steuermechanismus ausgestattet ist, der den Do-Not-Track-Wert aus den drahtlosen Signalen herausfiltert und wobei der Steuermechanismus ferner ausgelegt ist zum Sperren der weiteren Verwendung der drahtlosen Signale in der Sniffing-Hardware abhängig von dem Do-Not-Track-Wert.

7. Computerlesbares Speicherungsmedium, das Anweisungen umfasst, die, wenn sie ausgeführt werden, bewirken, dass eine Datenverarbeitungsvorrichtung die Schritte des Verfahrens nach einem der Ansprüche 4-6 ausführt.

## Revendications

1. Dispositif électronique portable d'utilisateur final (1) comprenant un module de communication sans fil, une mémoire et une interface utilisateur, dans lequel la mémoire comprend une valeur ne pas suivre qui peut être commutée par un utilisateur final par le biais de l'interface utilisateur entre Oui et Non, et dans lequel le dispositif d'utilisateur final est en outre conçu pour communiquer (13) un indicateur ne pas suivre par le biais du module de communication sans fil en fonction de la valeur ne pas suivre, **caractérisé en ce que** le dispositif d'utilisateur final est pourvu d'un générateur de trame de gestion de Wi-Fi conçu pour intégrer un indicateur ne pas suivre sous forme de métadonnées dans les sondes Wi-Fi.

2. Dispositif électronique portable d'utilisateur final selon la revendication 1, dans lequel les métadonnées sont réalisées sous la forme d'un bit prédéterminé dans la trame de sonde Wi-Fi.

3. Matériel de reniflage (10) conçu pour capturer (14) des signaux sans fil, comprenant des sondes Wi-Fi ayant des métadonnées, de dispositifs électroniques portables d'utilisateur final, dans lequel le matériel de reniflage est pourvu d'un mécanisme de commande qui filtre une valeur ne pas suivre à partir des métadonnées et lequel mécanisme de commande est en outre conçu pour bloquer en outre une utilisation des signaux sans fil dans le matériel de reniflage en fonction de la valeur ne pas suivre.

4. Procédé pour protéger la confidentialité d'utilisateur tout en permettant des services de suivi basé sur un réseau, le procédé comprenant :
- la fourniture (11) à un utilisateur d'un dispositif électronique portable d'utilisateur final, par le biais d'une interface utilisateur de ce dernier, de l'option de permettre ou de refuser un suivi basé sur un réseau ;
- le stockage (12) d'une valeur ne pas suivre dans la mémoire du dispositif en se basant sur l'option sélectionnée par l'utilisateur ;
- la communication (13) d'un indicateur ne pas suivre par le biais d'un module de communication sans fil du dispositif en fonction de la valeur ne pas suivre, **caractérisé en ce que** l'étape de communication d'un indicateur ne pas suivre comprend en outre la génération d'une sonde Wi-Fi par le biais d'un générateur de trame de gestion de Wi-Fi, dans lequel un indicateur ne pas suivre est intégré sous la forme de métadonnées dans la sonde Wi-Fi.

5. Procédé selon la revendication 4, dans lequel les métadonnées sont réalisées sous la forme d'un bit prédéterminé dans la trame de sonde Wi-Fi.

6. Procédé selon l'une quelconque des revendications 4 et 5, dans lequel le procédé comprend en outre l'étape de réception d'un signal en provenance du dispositif électronique portable d'utilisateur final au moyen d'un matériel de reniflage, dans lequel le matériel de reniflage est pourvu d'un mécanisme de commande qui filtre la valeur ne pas suivre à partir des signaux sans fil et lequel mécanisme de commande est en outre conçu pour bloquer en outre une utilisation des signaux sans fil dans le matériel de reniflage en fonction de la valeur ne pas suivre.

7. Support de stockage lisible par ordinateur comprenant des instructions qui, lorsqu'elles sont exécutées, contraignent un appareil de traitement de données de réaliser les étapes du procédé selon l'une quelconque des revendications 4 à 6.
